# EUROPÄISCHE PATENTSCHRIFT

(11) **EP 0 818 421 B1**
(45) Veröffentlichungstag und Bekanntmachung des Hinweises auf die Patenterteilung: **04.08.1999**
(21) Anmeldenummer: 97111270.1
(22) Anmeldetag: 04.07.1997
(51) Int. Cl.: C02F 1/66, C02F 1/42, C02F 1/74, C02F 9/00, E04H 4/12

(54) **Verfahren und Vorrichtung zur Aufbereitung und Reinhaltung von Wasser für Swimmingpoolanlagen**
Process and apparatus for treatment of swimmingpool water and for keeping it clean
Procédé et dispositif pour traiter l'eau des piscines et la tenir propre

(30) Priorität: 12.07.1996 DE 19628204; 03.08.1996 DE 19631472
(43) Veröffentlichungstag der Anmeldung: 14.01.1998
(73) Patentinhaber: Koslowsky, Peter, 39171 Beyendorf (DE)
(72) Erfinder: Koslowsky, Peter, 39171 Beyendorf (DE)
(74) Vertreter: Petra, Elke, Dipl.-Ing.

(56) Entgegenhaltungen:
- CH-A- 175 037
- CH-A- 280 487
- CH-A- 352 633
- DE-A- 2 159 774
- DE-A- 2 843 294
- DE-A- 4 445 689

## Beschreibung

Die Erfindung betrifft ein Verfahren und eine Vorrichtung zur Aufbereitung von Wasser für Swimmingpoolanlagen und zur Reinhaltung von Wasser solcher Anlagen.

Es ist bekannt, die Wasserfüllung voll Swimmingpoolanlagen mit einei Vielzahl von Chemikalien wie. Enthärtungsmittel, Desinfektionsmittel, pH-Wert-Reagenzien, Flockungsmittel usw., insbesondere Chlorpräparate zur Desinfektion und Oxydation gleichzeitig und/oder nacheinander zu versetzen, um eine Trübung des Wassers und eine bakterielle Verseuchung desselben zu vermeiden sowie das Wasser zu enthärten.

Nachteilig ist dabei, daß diese Chemikalien in ihrer Vielzahl sehr kostenaufwendig zu erwerben und zu bevorraten sind sowie in ihrer sachgemäßen Anwendung sehr kompliziert zu handhaben sind. Sie sind auch in ihrer Konzentration meist giftig und physiologisch nicht unbedenklich für Kinder sogar gefährlich. Der Wasserfüllung zugesetzt verbleiben sie in derselben bis deren Wirksamkeit nachläßt und werden dann der Wasserfüllung aufkonzentriert, so daß sie permanent im Wasser befindlich sind. Dies erfordert eine ständige Aufmerksamkeit des Anwenders. Diese Chemikalien sind keine umweltfreundlichen Produkte und belasten die Umwelt schon bei ihrer Herstellung und ihrer Entsorgung. Sie sind auch in ihrer Anwendung nicht ohne gesundheitliche und unangenehme Nebenwirkungen auf das Wohlbefinden der Anwender. Am bekanntesten sind Bindehautreizungen der Augen durch gechlortes Wasser und der unangenehme Geruch und Geschmack solchen Wassers.

In der CH 17 50 37 A ist ein Verfahren zur Bekämpfung von Algenwucherungen in Freibädern (Petunia-Verfahren) beschrieben, bei dem soviel Kalk-Hydroxid dem Wasser zugesetzt wird, daß die im Wasser enthaltene, freie Kohlensäure gebunden wird, die Bikarbonate in Monokarbonate vollständig übergeführt werden und ein Überschuß an Kalkhydrat im Wasser übrig bleibt.

Problem der Erfindung ist es, ein Verfahren zur Aufbereitung und zur Reinhaltung von Wasser in Schwimmbadanlagen zu schaffen, das ohne die Vielzahl der bekannten Wasserzusatzchemikalien, allein mit physiologisch völlig unbedenklichen natürlichen umweltfreundlichen Stoffen, wie Kalkstein, Kalk, Kohlendioxyd, Luft und auf einfache Weise die Aufbereitung und Reinhaltung von Wasserfüllungen in Schwimmbads erlaubt. Aufgabe der Erfindung ist es auch, eine Vorrichtung zur im wesentlichen kontinuierlichen Wasserreinhaltung zu schaffen, die sich auch zur kostengünstigen Nachrüstung vorhandener Schwimmbadanlagen mit Filterkreislauf eignet.

Erfindungsgemäß wird das Problem, wie mit den Patentansprüchen angegeben, gelöst.

Durch die Dosierung von Kalkwasser zur Aufbereitung der Wasserfüllung stellt sich in demselben ein Kalk-Kohlensäuregleichgewicht ein, so daß in der Wasserfüllung das gesamte Kohlendioxyd der Karbonathärte zugehörig ist. Damit ist den Algen, als Nährboden für Bakterien und Krankheitserreger, deren Nährboden entzogen.

Infolge der Kalkfällung in der Wasserfüllung werden Phosphat und Sulfat in schwerlösliche Kalziumsalze überführt und damit Stoffwechsel und Wachstum von Mikroorganismen wiederum weiter eingeschränkt.

Auch körpereigene Stoffe Cremes, Badeöle usw. werden als unlösliche Kalkseifen ausgefällt und sind damit mechanisch ausfilterbar.

Durch die Entfernung der Kationen bei der Wasseraufbereitung im Ionenaustauscher entsteht ein härtefreies und saures Wasser. Durch die Zuspeisung von Kalkwasser kommt es bei einem pH-Wert größer als 7 zu einer Dominanz von Kalzium, woraus eine Brechung des Sonnenlichts in schöne grün-blaue Farben resultiert. Die Wasserqualität läßt sich einfach durch optischen Eindruck beurteilen, da durch Verunreinigungen die Lichtbrechung verändert wird.

Durch den Eintrag von Luftsauerstoff in die Wasserfüllung mittels scharfen Wasserstrahls oder Druckluft wird der Oxydationsprozeß zur Eliminierung restlicher organischer Substanzen wesentlich beschleunigt.

Auch kommt es zum Austrag von Kohlendioxid, was zur Bildung von Kalzit führt, welches kleine Schweb- und Sinkstoffe zu größeren ausfilterbaren Flocken adsorbiert.

Wird ein Kalk besonderer Güte verwendet, z. B. mit bestimmten Inhaltsstoffen wie Spurenelementen, kann dem Wasser ein Heilwasser ähnlicher Charakter verliehen werden.

Mittels der erfindungsgemäßen Vorrichtung ist das Verfahren mit geringem technischen Aufwand realisierbar und erlaubt auch den Einsatz von moderner Regeltechnik für eine weitgehend automatische Prozeßführung über den automatischen Chemismus hinaus.

Nachstehend wird die Erfindung an einem Ausführungsbeispiel näher erläutert.

Ein Swimmingpool der Größe 7 m x 2 m x 4 m wird mit 50 m³ Wasser befüllt. Das Wasser wird dazu über einen Ionenaustauscher 6 geführt, wobei das Wasser enthärtet wird, d. h., es werden permanente Härte und temporäre Härte aus demselben entfernt. Durch den natürlichen Eintrag voll Kohlendioxyd aus der Umgebungsluft gegebenenfalls Zudosierung von Kohlendioxyd durch Verwirbelung von Luft in der Wasserfüllung 1 mittels scharfen Wasserstrahles 21 oder direkte Einleitung von Kohlendioxyd und Einleitung von Kalkwasser 8 aus denk Löse- und Absetzbehältnis 7, wird bei ständiger Umwälzung der Wasserfüllung 1 mittels Umwälzpumpen 17, 16 ein pH-Wert von 7,9 bis 8,1 in der Wasserfüllung 1 eingestellt. Dadurch stellt sich das Kalk-Kohlensäuregleichgewicht ein.

Zur Aufrechterhaltung dieses Kalk-Kohlensäuregleichgewichtes wird die so aufbereitete Wasserfüllung 1 über die Rohrleitung 19, die Umwälzpumpe 17, den Filter 15, teilweise oder vollständig über das Ventil 14, die erste Rohrleitung 13, das Behältnis 12 mit einer Kalksteinfüllung von 30 Liter in einer Körnung von 30 mm und über die zweite Rohrleitung 22 zurück in den Swimmingpool umgewälzt. Dabei werden die ausgefällten Kalziumionen ersetzt und das Kalk-Kohlensäuregleichgewicht aufrecht erhalten.

Der Zustand der Wasserfüllung 1 im Swimmingpool wird mittels pH-Wert-Meßwertgeber 2 überwacht. Die Meßwertsignale desselben steuern dann mittels der Steuertechnik 5 die Ventile 14, 18, 11 und die Pumpe 10 in einem Regelkreis.

### Aufstellung der verwendeten Bezugszeichen

- 1: Wasserfüllung
- 2: pH-Wert-Meßwertgeber (Sensor)
- 3: Fülleitung
- 4: Frischwasserleitung
- 5: Steuertechnik (Regelkreis)
- 6: Ionenaustauscher (Wasserenthärter)
- 7: Löse- und Absetzbehältnis
- 8: Kalkwasser
- 9: Kalkschlamm
- 10: Pumpe
- 11: Motorventil
- 12: Behältnis
- 13: erste Rohrleitung
- 14: Ventil
- 15: Filter
- 16: Pumpe
- 17: Umwälzpumpe
- 18: Ventil
- 19: Rohrleitung
- 20: Rohrleitung
- 21: Wasserstrahl
- 22: zweite Rohrleitung

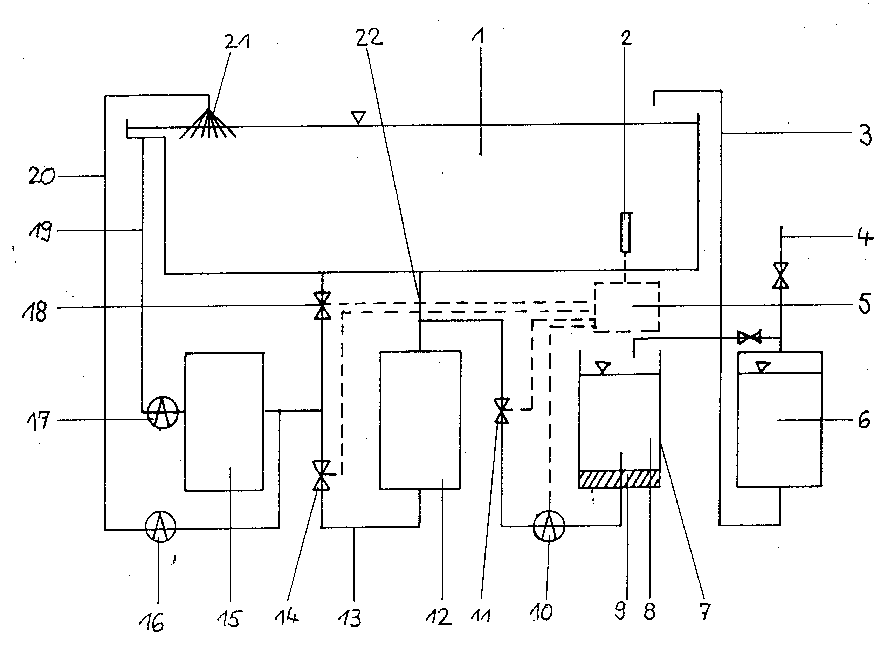

## Patentansprüche

1. Verfahren zur Aufbereitung und Reinhaltung von Wasser für Swimmingpoolanlagen, gekennzeichnet durch folgende Schritte
a) zunächst wird die Swimmingpoolanlage mit enthärtetem Wasser angefüllt, wobei das Wasser mittels Ionenaustauscher (6) so behandelt worden ist, daß dieses sauer und härtefrei ist;
b) dann wird der Wasserfüllung (1) in der Swimmingpoolanlage eine klare gesättigte Lösung von Weißkalk oder Weißkalkhydrat in Wasser (Kalkwasser (8)), in einer Menge zugesetzt, daß ein pH-Wert von 7,9 bis 8,1 eingestellt wird;
c) die so aufbereitete Wasserfüllung (1) der Swimmingpoolanlage wird mittels Rohrleitungen (13, 19, 20), Pumpe (17), Ventilen (14, 18), Filter (15) und teilweise oder vollständig über eine Vorlage aus gebrochenem Kalkstein im Kreislauf geführt und auf einen pH-Wert größer als 7 bis 8,1 gehalten, gegebenenfalls unter weiterem Zusatz von Kalkwasser;
d) die Wasserverluste durch Badebetrieb, Verdunstung und Rückspülung der Filteranlage werden mit saurem und härtefreiem Wasser ergänzt, um eine Aufsalzung der Wasserfüllung zu vermeiden.

2. Verfahren nach Anspruch 1,
dadurch gekennzeichnet, daß die teilweise oder vollständige Führung des Wasserkreislaufes über die Vorlage aus Kalkstein mittels eines Bypasses vom Filterkreislauf erfolgt.

3. Verfahren nach nach Anspruch 1 und 2,
dadurch gekennzeichnet, daß die Menge des über die Kalksteinvorlage im Behältnis (12) geführten Wassers und/oder ein Zusatz von Kalkwasser (8) von einem im Schwimmbad befindlichen pH-Wert-Meßwertgeber (2) mittels einer an sich bekannten Steuertechnik (5) geregelt wird.

4. Verfahren nach Anspruch 1,
dadurch gekennzeichnet, daß das Wasser zeitweilig oder permanent mit einem Stück oxidativ katalytisch wirkendem Metall, wie Pt, Pd, Ag, Cu und weitere in Berührung gebracht wird.

5. Verfahren nach Anspruch 1,
dadurch gekennzeichnet, daß zur Einstellung des Kalk-Kohlensäure-Gleichgewichtes kurzzeitig Kohlendioxid in Form von Druckgas in das Wasser eingebracht wird.

6. Verfahren nach Anspruch 1,
dadurch gekennzeichnet, daß zur Förderung des Oxidationsprozesses zeitweilig oder permanent Druckluft in das Wasser eingebracht wird.

7. Verfahren nach Anspruch 1,
dadurch gekennzeichnet, daß ein scharfer Wasserstrahl (21), aus dem Wasserkreislauf (20) abgezweigt oder aus einem separaten Wasserkreislauf so auf die Oberfläche des Wassers im Schwimmbad gerichtet ist, daß von diesem Umgebungsluft mit dem Wasser verwirbelt wird.

8. Vorrichtung zur Durchführung des Verfahrens nach den Ansprüchen 1 bis 7, enthaltend:
- ein Schwimmbadbecken (1) zur Aufnahme einer vorbestimmten Wassermenge,
- Leitungen (3, 4) zum Einfüllen dieses Wassers in das Schwimmbadbecken (1),
- einen Ionenaustauscher (6) zwischen Leitungen (3, 4), zum Behandeln dieses Wassers, so daß es sauer und härtefrei ist,
- eine Einrichtung (7, 10, 11, 22) zum Einbringen in das saure und härtefreie Wasser von Kalkwasser, zur Herstellung des Kalk-Kohlensäure-Gleichgewichts,
- eine Einrichtung (13, 12, 22) zum zumindest teilweisen Führen im Kreislauf des behandelten Wasser über eine Vorlage aus gebrochenem Kalkstein und Halten auf einem ph-Wert größer als 7,
- und eine Einrichtung zum Ergänzen der Wasserverluste mit saurem und härtefreiem Wasser.

9. Vorrichtung nach Anspruch 8,
dadurch gekennzeichnet, daß die erste Rohrleitung (13), das Behältnis (12) und die zweite Rohrleitung (22) als Bypaß zum Filterkreislauf ausgebildet sind.

10. Vorrichtung nach Anspruch 8 und 9,
dadurch gekennzeichnet, daß im Schwimmbad oder an anderer geeigneter Stelle im Filterkreislauf ein pH-Wert-Meßwertgeber oder Sensor (2) angeordnet ist, mittels welchem das Ventil im Filterkreislauf oder im Bypaß oder die Pumpe in der separaten Rohrleitung steuerbar ist.

11. Vorrichtung nach Anspruch 8,
dadurch gekennzeichnet, daß der Löse- und Absetzbehältnis (7) für Kalkwasser (8) mittels Rohrleitung und Dosierpumpe (10) mit der Überdruckleitung des Filterkreislaufes oder der zweiten Rohrleitung (22) verbunden ist oder mittels Rohrleitung direkt mit dem Schwimmbad verbunden ist.

12. Vorrichtung nach Anspruch 11,
dadurch gekennzeichnet, daß die Dosierpumpe (10) des Löse- und Absetzbehältnisses (7) so mit dem elektrischen Regelkreis der pH-Wert-abhängigen Pumpen- oder Ventilsteuerung (5) des Behältnisses (12) für Kalkstein zusammengeschaltet ist, daß die Dosierpumpe (10) bei erheblicher pH-Wert-Soll-Istwert-Differenz ein- oder ausschaltbar ist.

13. Vorrichtung nach Anspruch 8 bis 12,
dadurch gekennzeichnet, daß die Ventile (11, 14, 18) vom Regelkreis gesteuerte Motorventile sind.

14. Vorrichtung nach Anspruch 8 bis 13,
dadurch gekennzeichnet, daß das mit Kalkstein angefüllte Behältnis (12) als offenes Behältnis ausgebildet und dessen Überlauf über dem Niveau der Wasserfüllung angeordnet ist.

## Claims

1. A process for treating water for swimming pools and keeping it clean, characterised by the following steps:
a) firstly the swimming pool is filled with softened water, the water having been treated by means of ion exchangers (6) in such a way that it is acid and hardness-free;
b) then a clear saturated solution of white lime or white lime hydrate in water (lime water (8)) is added to the water filling (1) in the swimming pool, in an amount such that a pH-value of 7.9 to 8.1 is set;
c) the water filling (1) of the swimming pool, which is treated in that way, is circulated by means of conduits (13, 19, 20), a pump (17), valves (14, 18) and a filter (15) and partially or completely over a bed of crushed limestone and kept at a pH-value of greater than 7 to 8.1, possibly with the further addition of lime water; and
d) the water losses due to bathing, evaporation and back-flushing of the filter installation are supplemented by acid and hardness-free water in order to prevent an increase in the salt content of the water filling.

2. A process according to claim 1 characterised in that the operation of partially or completely circulating the water over the bed of limestone is effected by means of a by-pass from the filter circuit.

3. A process according to claim 1 and claim 2 characterised in that the amount of water passed over the limestone bed in the container (12) and/or an addition of lime water (8) is regulated by a pH-value measurement value sensor (2) disposed in the swimming bath, by means of a per se known control procedure (5).

4. A process according to claim 1 characterised in that the water is temporarily or permanently brought into contact with a portion of metal having an oxidative catalysing action such as Pt, Pd, Ag, Cu and others.

5. A process according to claim 1 characterised in that carbon dioxide in the form of gas under pressure is briefly introduced into the water to set the lime-carbonic acid equilibrium.

6. A process according to claim 1 characterised in that compressed air is temporarily or permanently introduced into the water to promote the oxidation procedure.

7. A process according to claim 1 characterised in that a sharp water jet (21) is branched off from the water circuit (20) or is directed from a separate water circuit on to the surface of the water in the swimming bath in such a way that turbulence is produced by that ambient air with the water.

8. Apparatus for carrying out the process according to claims 1 to 7 including:
- a swimming pool container (1) for receiving a predetermined amount of water,
- conduits (3, 4) for introducing said water into the swimming pool container (1),
- an ion exchanger (6) between conduits (3, 4) for treating said water so that it is acid and hardness-free,
- a device (7, 10, 11, 22) for introducing lime water into the acid and hardness-free water, to produce the lime-carbonic acid equilibrium,
- a device (13, 12, 22) for at least partially circulating the treated water over a bed of crushed limestone and keeping it at a pH-value of greater than 7, and
- a device for supplementing the water losses with acid and hardness-free water.

9. Apparatus according to claim 8 characterised in that first conduit (13), the container (12) and the second conduit (22) are in the form of a by-pass in relation to the filter circuit.

10. Apparatus according to claim 8 and claim 9 characterised in that arranged in the swimming bath or at another suitable location in the filter circuit is a pH-value measurement value sender or sensor (2), by means of which the valve in the filter circuit or in the by-pass or the pump in the separate conduit is controllable.

11. Apparatus according to claim 8 characterised in that the dissolving and settling container (7) for lime water (8) is connected by means of a conduit and metering pump (10) to the over-pressure conduit of the filter circuit or the second conduit (22) or is connected directly to the swimming bath by means of a conduit.

12. Apparatus according to claim 11 characterised in that the metering pump (10) of the dissolving and settling container (7) is so connected to the electrical regulating circuit of the pH-value-dependent pump or valve control (5) of the container (12) for limestone that the metering pump (10) can be switched on or off in the case of a considerable reference value-actual value difference in the pH-value.

13. Apparatus according to claims 8 to 12 characterised in that the valves (11, 14, 18) are motorised valves which are controlled by the regulating circuit.

14. Apparatus according to claims 8 to 13 characterised in that the container (12) which is filled with limestone is in the form of an open container and its overflow is arranged above the level of the water filling.

## Revendications

1. Procédé pour traiter l'eau des piscines et pour la tenir propre, caractérisé par les stades suivante :
a) on emplit d'abord la piscine d'eau adoucie, l'eau étant traitée au moyen d'un échangeur (6) d'ions de manière à ce qu'elle soit acide et sans dureté;
b) on ajoute ensuite à l'eau (1) de la piscine une solution limpide saturée de chaux blanche ou d'hydroxyde de calcium dans l'eau (eau de chaux (8)) en une quantité qui établit un pH de 7,9 à 8,1;
c) on fait circuler en circuit fermé l'eau (1) ainsi traitée de la piscine au moyen de conduits (13, 19, 20), d'une pompe (17), de vannes (14, 18), d'un filtre (15) et partiellement ou entièrement sur de la pierre à chaux fragmentée et on maintient un pH supérieur à 7 à 8,1, le cas échéant en ajoutant encore de l'eau de chaux ;
d) on compense les pertes en eau en raison des baignades, de l'évaporation et du lavage en retour de l'installation de filtration, par de l'eau acide et sans dureté pour prévenir toute salification de l'eau.

2. Procédé selon la revendication 1,
caractérisé en ce qu'on effectue le passage partiel ou complet du circuit d'eau sur de la pierre à chaux au moyen d'une dérivation du circuit de filtration.

3. Procédé selon la revendication 1 ou 2,
caractérisé en ce l'on règle la quantité de l'eau qui passe sur la pierre à chaux dans le récipient (12) et/ou une addition d'eau de chaux (8) par un pH-mètre (2) se trouvant dans le bain au moyen d'une technique (5) connue de commande.

4. Procédé selon la revendication 1,
caractérisé en ce l'on met en contact de temps en temps ou de manière permanente l'eau avec un morceau de métal ayant une action catalytique d'oxydation, comme Pt, Pd, Ag, Cu et d'autres.

5. Procédé selon la revendication 1,
caractérisé en ce que, pour établir l'équilibre chaux-acide carbonique, on introduit brièvement du dioxyde de carbone sous forme de gaz comprimé dans l'eau.

6. Procédé selon la revendication 1,
caractérisé en ce que, pour favoriser le processus d'oxydation, on introduit de temps en temps ou d'une manière permanente de l'air comprimé dans l'eau.

7. Procédé selon la revendication 1,
caractérisé en ce qu'on dérive du circuit (20) d'eau ou d'un circuit d'eau distinct un jet (21) d'eau que l'on envoie à la surface de l'eau du bain de manière à ce que de l'air ambiant soit mis en tourbillonnement avec l'eau.

8. Dispositif pour la mise en oeuvre du procédé suivant les revendications 1 à 7, comprenant :
- un bassin (1) de natation de réception d'une quantité d'eau donnée à l'avance,
- des conduits (3, 4) pour envoyer cette eau dans le bassin (1) de natation,
- un échangeur (6) d'ions entre les conduits (3 et 4) pour traiter cette eau de manière qu'elle soit acide et sans dureté,
- un dispositif (7, 10, 11, 22) d'introduction dans l'eau acide et dépourvue de dureté d'eau de chaux pour obtenir l'équilibre chaux-acide carbonique,
- un dispositif (13, 12, 22) pour faire passer au moins partiellement en circuit fermé l'eau traitée sur de la pierre à chaux fragmentée et pour maintenir un pH supérieur à 7,
- et un dispositif pour compenser les pertes en eau par de l'eau acide et sans dureté.

9. Dispositif selon la revendication 8,
caractérisé en ce que le premier conduit (13), le récipient (12) et le deuxième conduit (22) sont constitués sous la forme d'une dérivation par rapport au circuit de filtration.

10. Dispositif selon la revendication 8 ou 9,
caractérisé en ce qu'il est monté dans le bassin de natation ou à un autre endroit dans le circuit de filtration un pH-mètre ou un capteur (2) au moyen duquel on peut commander la vanne du circuit de filtration ou dans la dérivation ou la pompe du conduit distinct.

11. Dispositif selon la revendication 8,
caractérisé en ce que le récipient (7) de mise en solution et de décantation de l'eau (8) de chaux communique au moyen d'un conduit et d'une pompe (10) doseuse avec le conduit de surpression du circuit de filtration ou avec le deuxième conduit (22) ou au moyen d'un conduit directement avec le bassin de natation.

12. Dispositif selon la revendication 11,
caractérisé en ce la pompe (10) doseuse du récipient (7) de mise en solution et de décantation est reliée au circuit électrique de réglage de la commande (5) de pompe ou de vanne en fonction du pH du récipient (12) de la pierre à chaux de manière que la pompe (10) doseuse puisse être branchée ou débranchée lors d'une différence considérable entre la valeur de consigne et la valeur réelle du pH.

13. Dispositif selon l'une des revendications 8 à 12,
caractérisé en ce les vannes (11, 14, 18) sont des vannes motorisées commandées par le circuit de régulation.

14. Dispositif selon l'une des revendications 8 à 13,
caractérisé en ce que le récipient (12) empli de pierre à chaux est constitué en récipient ouvert et son trop-plein est disposé au dessus du niveau de l'eau.
